# EUROPEAN PATENT APPLICATION

(11) **EP 4 478 492 A1**
(43) Date of publication of application: **18.12.2024**
(21) Application number: 23753039.9
(22) Date of filing: 27.01.2023
(51) Int. Cl.: H01M 50/105, H01M 50/124, H01M 50/184, H01M 10/04, H01M 10/052, B29C 43/36, B29C 65/00

(54) **BATTERY CASE, BATTERY CASE MOLDING DEVICE, AND SECONDARY BATTERY MANUFACTURING METHOD**

(30) Priority: 08.02.2022 KR 20220016539
(71) Applicant: LG Energy Solution, Ltd., Seoul 07335 (KR)
(72) Inventor: KIM, Soo Young, Daejeon 34122 (KR); HA, Hyun Chul, Daejeon 34122 (KR); KIM, Do Hun, Daejeon 34122 (KR)
(74) Representative: Goddar, Heinz J.
(86) International application number: PCT/KR2023/001296
(87) International publication number: WO 2023/153688

(57) **Abstract**

The present invention relates to a battery case, a battery case shaping apparatus, and a secondary battery manufacturing method. Provided are a battery case, a battery case shaping apparatus, and a secondary battery manufacturing method, which prevent insulation failure by allowing a sealing material melted in a sealing portion to be accommodated in an insulation failure-preventing portion, thereby improving both productivity and quality.

A battery case according to an embodiment of the present invention is a battery case for a pouch-type secondary battery, which accommodates an electrode assembly therein, and includes a first case, a second case configured to cover the first case from above, a cup portion provided in at least one of the first case or the second case and having a space formed to accommodate the electrode assembly, and a side portion formed along an outer circumference of each of the first case and the second case. The side portion includes a sealing portion sealed by bringing the first case and the second case into contact with each other and an insulation failure-preventing portion which is formed between the sealing portion and the cup portion and accommodates a sealing material melted in the sealing portion.

## Description

### TECHNICAL FIELD

### CROSS-REFERENCE TO RELATED APPLICATION

The present application claims the benefit of the priority of Korean Patent Application No. 10-2022-0016539, filed on February 08, 2022, which is hereby incorporated by reference in its entirety.

### TECHNICAL FIELD

The present invention relates to a battery case, a battery case shaping apparatus, and a secondary battery manufacturing method.

### BACKGROUND ART

Secondary batteries refer to chargeable and dischargeable batteries unlike primary batteries that are not chargeable, and there are several types of secondary batteries such as nickel cadmium batteries, nickel hydrogen batteries, lithium ion batteries, and lithium ion polymer batteries. The secondary batteries have been applied to and used for not only small products, such as digital cameras, laptop computers, mobile phones, PDAs, and E-bikes, but also large products requiring high power, such as electric vehicles and hybrid vehicles, and power storage devices or backup-power storage devices for storing surplus generated power and new renewable energy.

The secondary batteries are classified into a pouch type, a can type, or the like according to a material of a battery case that accommodates an electrode assembly. In the pouch-type battery, the electrode assembly is accommodated in a pouch made of a flexible polymer material that has an irregular shape. Also, in the can-type battery, the electrode assembly is accommodated in a case made of a metal or plastic material or the like that has a predetermined shape.

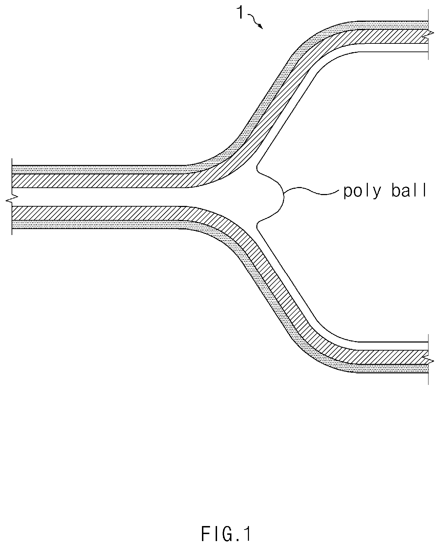

FIG. 1 is a side cross-sectional view illustrating a battery case of a pouch-type secondary battery according to the related art. A battery case 1 of the pouch-type secondary battery is manufactured by performing a press process on a flexible pouch film to shape a cup portion. The pouch film has a multi-layer structure in which a plurality of layers are laminated. In particular, the innermost layer includes a sealant layer and is formed on the innermost side of the pouch film to directly contact an electrode assembly, and this layer has the chemical resistance to an electrolyte and the thermal adhesion and also serves as a sealing material. The innermost layer is mainly made of a polyolefin-based resin and preferably made of polypropylene (PP).

When a cup portion of the battery case is shaped, an electrode assembly is accommodated in an accommodation space of the cup portion. Then, the secondary battery is manufactured by a heat sealing method in which the side of the battery case is pressed and heated with a sealing tool. During the sealing by the heat sealing method, it is preferable to perform the sealing for a long time at a low temperature range if possible. However, in order to increase a production rate, it is required to perform sealing for a short time at high temperature and high pressure.

However, when the side is pressed at high temperature and pressure, a portion of the sealant layer, which is the innermost layer, is melted and pushed toward the accommodation space of the cup portion. The pushed sealant layer may be irregularly positioned in the accommodation space of the cup portion or may protrude toward the accommodation space to form a poly-ball. In this case, the pushed sealant layer may not only come into contact with the electrode assembly and contaminate the electrode assembly, but also reduce a sealing thickness of a sealing portion, causing direct insulation failure or insulation failure due to external physical impact.

Therefore, it is required to develop a battery case and a method for manufacturing a secondary battery, which may secure the product quality while improving the productivity of a sealing process.

### DISCLOSURE OF THE INVENTION

### TECHNICAL PROBLEM

The present invention has been made to solve the above limitation, and an objective of the present invention is to provide a battery case, a battery case shaping apparatus, and a secondary battery manufacturing method, which prevent insulation failure by allowing a sealing material melted in a sealing portion to be accommodated in an insulation failure-preventing portion, thereby improving both productivity and quality.

### TECHNICAL SOLUTION

A battery case according to an embodiment of the present invention is a battery case for a pouch-type secondary battery, which accommodates an electrode assembly therein, and includes a first case, a second case configured to cover the first case from above, a cup portion provided in at least one of the first case and the second case and having a space formed to accommodate the electrode assembly, and a side portion formed along an outer circumference of each of the first case and the second case, wherein the side portion includes a sealing portion sealed by bringing the first case and the second case into contact with each other and an insulation failure-preventing portion which is formed between the sealing portion and the cup portion and accommodates a sealing material melted in the sealing portion.

The insulation failure-preventing portion may be recessed from the inside to the outside of the side portion with respect to a depth direction of the cup portion.

The insulation failure-preventing portion may have a curved inner surface.

The depth of the insulation failure-preventing portion may be less than the depth of the cup portion.

The insulation failure-preventing portion may be formed at positions which correspond to each other in the side portion formed in the first case and the side portion formed in the second case.

The insulation failure-preventing portion may be formed in an unsealed state so as not to be in contact with each other in the side portion formed in the first case and the side portion formed in the second case.

The insulation failure-preventing portion may be continuously or intermittently formed along the circumference of the cup portion between the sealing portion and the cup portion.

The side portion further may include a movement-preventing portion that connects the insulation failure-preventing portion and the cup portion to each other and prevents the sealing material accommodated in the insulation failure-preventing portion from moving to the cup portion.

The movement-preventing portion may be formed in an unsealed state so as not to be in contact with each other in the side portion formed in the first case and the side portion formed in the second case.

The thickness of the movement-preventing portion may be greater than the thickness of the sealing portion and less than the thickness of the insulation failure-preventing portion.

The sealing material melted in the sealing portion may protrude toward the insulation failure-preventing portion.

A battery case shaping apparatus according to another embodiment of the present invention is an apparatus for shaping a battery case of a pouch-type secondary battery, which accommodates an electrode assembly therein, and includes a die plate having an upper surface, on which a pouch film is placed, the die plate having a shaping portion, which is recessed downward from or passes through the upper surface, and a groove, which is formed around the shaping portion, a stripper configured to press and fix the pouch film from above the die plate, the stripper having a punch hole, which passes through an upper surface and a lower surface thereof at a position corresponding to the shaping portion, and a rib, which is formed around the punch hole and faces the groove, and a punch inserted into the shaping portion of the die plate via the punch hole of the stripper to shape a cup portion in the pouch film.

A secondary battery manufacturing method according to another embodiment of the present invention is a method for manufacturing a pouch-type secondary battery, which accommodates an electrode assembly therein, and includes shaping a battery case that includes a cup portion and an insulation failure-preventing portion and accommodating the electrode assembly in the cup portion and sealing a sealing portion of the battery case, wherein the shaping of the battery case includes placing a pouch film on a die plate that has a shaping portion and a groove formed around the shaping portion, pressing and fixing the pouch film from above the die plate by a stripper that has a punch hole and a rib formed around the punch hole, wherein the rib is inserted into the groove to shape the insulation failure-preventing portion in the pouch film, and inserting a punch into the shaping portion of the die plate via the punch hole of the stripper to shape the cup portion in the pouch film.

### ADVANTAGEOUS EFFECTS

In a battery case according to the present invention, a sealing material melted in a sealing portion is accommodated in an insulation failure-preventing portion, and thus, insulation failure is minimized by preventing a discharged sealing material from being irregularly located or protruding in a cup portion. A space formed in the insulation failure-preventing portion may act as a buffer against external physical impact, thereby preventing additional insulation failure and improving the safety of a secondary battery.

In addition, even when sealing is performed at high temperature and pressure, the sealing material is accommodated in the insulation failure-preventing portion. Accordingly, the speed of the sealing process may be increased, thereby securing both productivity and quality of the battery case.

### BRIEF DESCRIPTION OF THE DRAWINGS

FIG. 1 is a side cross-sectional view illustrating a battery case of a pouch-type secondary battery according to the related art.
FIG. 2 is a perspective view illustrating a battery case and an electrode assembly accommodated in the battery case according to an embodiment of the present invention.
FIG. 3 is a side cross-sectional view illustrating a battery case according to an embodiment of the present invention.
FIG. 4 is a perspective view illustrating a battery case shaping apparatus according to another embodiment of the present invention.
FIG. 5 is a side cross-sectional view illustrating a battery case shaping apparatus according to another embodiment of the present invention.
FIG. 6 is a flowchart illustrating a secondary battery manufacturing method according to another embodiment of the present invention.

### MODE FOR CARRYING OUT THE INVENTION

Hereinafter, embodiments of the present invention are described in detail with reference to the accompanying drawings so as to be easily carried out by a person skilled in the art to which the present invention pertains. However, the present invention may be embodied in various different forms, and is neither limited nor restricted to the following embodiments.

In order to clearly describe the present invention, detailed descriptions of parts irrelevant to the invention or detailed descriptions of related well-known technologies that may unnecessarily obscure subject matters of the invention are omitted. In the specification, when reference numerals are given to components in each of the drawings, the same or similar components are designated by the same or similar reference numerals throughout the specification.

Also, terms or words used in the description and claims should not be restrictively interpreted as ordinary meanings or dictionary-based meanings, but should be interpreted as meanings and concepts conforming to the technical ideas of the present invention on the basis of the principle that an inventor can properly define the concept of a term so as to describe his or her invention in the best ways.

### Embodiment

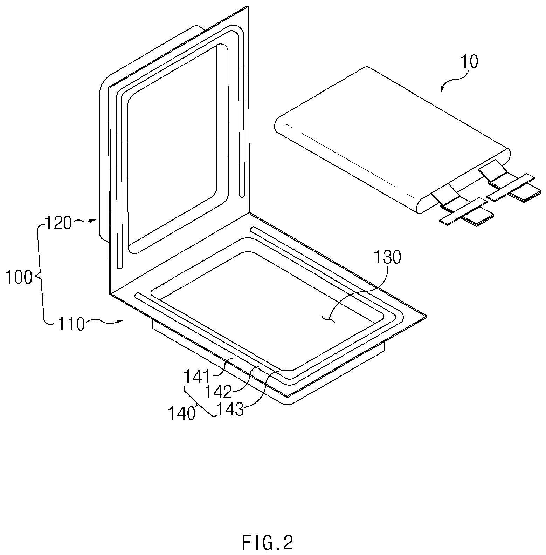

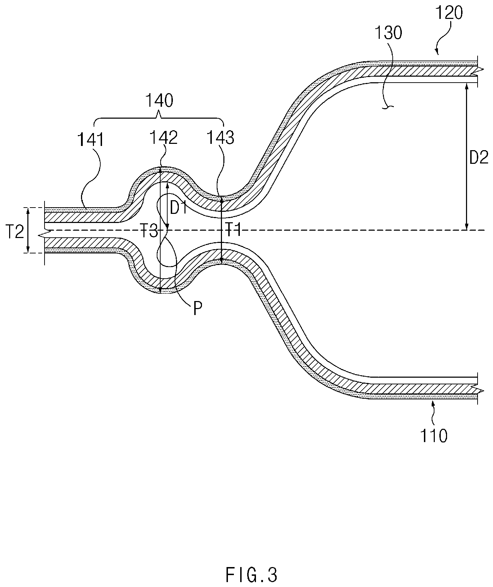

FIG. 2 is a perspective view illustrating a battery case and an electrode assembly accommodated in the battery case according to an embodiment of the present invention. FIG. 3 is a side cross-sectional view illustrating a battery case according to an embodiment of the present invention.

Referring to FIGS. 2 and 3, a battery case 100 according to an embodiment of the present invention is provided, and the battery case 100 for a pouch-type secondary battery, which accommodates an electrode assembly 10 therein, includes a first case 110, a second case 120, a cup portion 130, and a side portion 140.

First, the first case 110 and the second case 120 are formed by shaping a pouch film, and the second case 120 covers the first case 110 from above in a state in which the first case 110 is positioned at the bottom. Here, the second case 120 may cover the first case 110 in a state in which the first case 110 and the second case 120 are separated from each other, but the embodiment is not limited thereto. The first case 110 and the second case 120 may be shaped from a single pouch film, and the second case 120 may be folded above the first case 110 by a folding device and cover the upper portion thereof.

The pouch film has a multi-layer structure in which a plurality of layers are laminated, and this multi-layer structure may be configured by laminating a metal layer on an inner layer and laminating an outer layer on the metal layer. The inner layer includes a layer positioned on the innermost side of the pouch film, serves as a sealing material having the chemical resistance to an electrolyte and the thermal adhesion, and is made of mainly a polyolefin-based resin and preferably made of polypropylene (PP). The metal layer includes a layer disposed between the inner layer and the outer layer, maintains mechanical strength of the pouch film, and serves as a moisture and oxygen barrier. The metal layer may be made of an alloy of iron (Fe), carbon (C), chromium (Cr), and manganese (Mn), an alloy of iron (Fe), carbon (C), chromium (Cr), and nickel (Ni), or the like, and preferably made of aluminum (Al). The outer layer includes a layer formed on the outermost side of the pouch film, serves to protect the battery from external impact, and is required to have insulation and thermal resistance because this layer comes into direct contact with hardware. The material of the outer layer may include a single layer of one or a composite layer of two or more selected from polyethylene (PE), polypropylene (PP), polyethylene terephthalate (PET), nylon, low density polyethylene (LDPE), and high density polyethylene (HDPE).

The cup portion 130 is provided in at least one of the first case 110 or the second case 120 and has a space formed to accommodate the electrode assembly 10. The cup portion 130 may be formed only in the first case 110, may be formed only in the second case 120, or may be formed in both the first case 110 and the second case 120.

The side portion 140 represents regions which are formed along outer circumferences of the first case 110 and the second case 120. For example, for a battery case 100 in which a first case 110 and a second case 120 are shaped from a single pouch film and the second case 120 is folded above the first case 110 to cover the upper portion thereof, the side portion 140 may represent edges formed along the outer circumferences of the first case 110 and the second case 120, except for regions folded between the first case 110 and the second case 120. However, when the second case 120 covers the first case 110 in a state in which the first case 110 or the second case 120 is separated, the side portion 140 may represent edges of each of the first case 110 and the second case 120 separated from each other.

Meanwhile, the side portion 140 of the battery case 100 according to an embodiment of the present invention includes a sealing portion 141, which is sealed by bringing the first case 110 and the second case 120 into contact with each other, and an insulation failure-preventing portion 142, which is formed between the sealing portion 141 and the cup portion 130 and accommodates a sealing material melted in the sealing portion 141. Therefore, in the battery case 100 according to an embodiment of the present invention, the sealing material melted in the sealing portion 141 may protrude toward the insulation failure-preventing portion 142.

In the battery case 100 according to the present invention as described above, a sealing material P is accommodated in the insulation failure-preventing portion 142 even when melted due to heating and pressing in the sealing portion 141 and flowing out. Accordingly, it is possible to prevent insulation failure that occurs as the sealing material P is locally located at irregular positions. In addition, even when melted, the sealing material P is not directly exposed to the cup portion 130 but is accommodated in the insulation failure-preventing portion 142. Therefore, sealing may be performed at higher temperature and pressure to increase a process speed, thereby securing both productivity and quality of the battery case 100.

Hereinafter, the insulation failure-preventing portion 142 is described in detail with reference back to FIGS. 2 and 3.

The insulation failure-preventing portion 142 may be recessed from the inside to the outside of the side portion 140 with respect to a depth direction of the cup portion 130. Here, when the second case 120 covers the first case 110 from above, the inside of the side portion 140 may represent one side where the first case 110 and the second case 120 face each other, and the outside thereof may represent an opposite side from the inside of the first case 110 and the second case 120. In addition, when an inner region and an outer region of the battery case 100 are distinguished by covering the second case 120 from above with the first case 110, the side located in the inner region of the battery case 100 may be referred to as the inside.

As described above, the insulation failure-preventing portion 142 of the battery case 100 according to the present invention is recessed from the inside to the outside of the side portion 140, and thus, a space is provided in the side portion 140. This space may accommodate the sealing material P that melts and flows out of the sealing portion 141, and may act as a buffer against external physical impact, thereby preventing the occurrence of additional insulation failure and improving the safety of the secondary battery after sealing.

Also, the insulation failure-preventing portion 142 may have a curved inner surface. Here, the inner surface may represent a surface of the insulation failure-preventing portion 142 which is formed inside the side portion 140. The insulation failure-preventing portion 142 includes a recessed space as described above, and the molten sealing material P may flow out and be accommodated in the insulation failure-preventing portion 142. Also, when the sealing material P does not flow out, this space may remain empty. Here, when an external impact is applied, there is a risk that the battery case 100 may be broken. However, in the present invention, the insulation failure-preventing portion 142 has the curved inner surface, and thus, even when the molten sealing material P is not accommodated, it is possible to minimize the risk of breakage of the battery case 100 that may occur due to the external impact.

Next, a depth D1 of the insulation failure-preventing portion 142 may be less than a depth D2 of the cup portion 130. When the second case 120 covers the first case 110 from above, the insulation failure-preventing portion 142 has a shape protruding to the outside of the battery case 100. Here, when the depth D1 of the insulation failure-preventing portion 142 is greater than the depth D2 of the cup portion 130, it is not so easy to accommodate a secondary battery cell, and the risk of damage to the insulation failure-preventing portion 142 is significantly increased. In addition, the insulation failure-preventing portion 142 has a relatively small width. Therefore, when the depth thereof is greater than the depth of the cup portion 130, the shaping is remarkably deteriorated, and it is difficult to maintain the shape even when shaped.

Therefore, the depth D1 of the insulation failure-preventing portion 142 is smaller than the depth D2 of the cup portion 130, and thus, the sealing material P melted from the sealing portion 141 may be appropriately accommodated while securing the shaping and structural stability of the insulation failure-preventing portion 142.

Also, the insulation failure-preventing portion 142 may be formed at positions which correspond to each other in the side portion 140 formed in the first case 110 and the side portion 140 formed in the second case 120. Therefore, an area occupied by the insulation failure-preventing portion 142 is minimized, and the sealing portion 141 having a larger area is obtained. Accordingly, it is possible to strengthen the sealing force and facilitate sealing, and at the same time, it is possible to maximize the space in which the molten sealing material P may be accommodated.

The insulation failure-preventing portion 142 may be formed in an unsealed state so as not to be in contact with each other in the side portion 140 formed in the first case 110 and the side portion 140 formed in the second case 120. According to the related art, a stepped portion or groove is provided in a battery case sealing apparatus instead of a battery case shaping apparatus. During a process of sealing a pouch-type battery case, a protrusion or raised portion is formed on the sealing portion of the battery case. However, in a sealing apparatus or sealing method according to the related art, a battery case is presented in a sealed state even at the protrusion or raised portion. Therefore, a sealing material melted in a sealing portion adjacent to a cup portion still flows into the cup portion, resulting in insulation failure. In addition, when a physical impact is applied from the outside of the battery case, it is difficult to expect a buffering effect.

However, in the battery case 100 according to the present invention, the insulation failure-preventing portion 142 is provided while forming a space in an unsealed state. Therefore, the molten sealing material P flowing out of the sealing portion 141 is sufficiently accommodated in the space, the sealing material P is prevented from being exposed to the cup portion 130, and the region, in which the sealing material P is not accommodated, remains as an empty space and may serve as a buffer space for absorbing external impact.

Meanwhile, the insulation failure-preventing portion 142 may be continuously or intermittently formed along the circumference of the cup portion 130 between the sealing portion 141 and the cup portion 130.

The continuous formation of the insulation failure-preventing portion 142 may represent that a linearly connected single portion is formed along the circumference of the cup portion 130 in each of the first case 110 or the second case 120. In this case, it is possible to minimize the exposure of the sealing material P melted in the sealing portion 141 to the cup portion 130 and to maximize the insulation failure prevention and the buffering effect.

Meanwhile, the intermittent formation of the insulation failure-preventing portion 142 may represent that a plurality of insulation failure-preventing portions 142 are formed at certain intervals along the circumference of the cup portion 130 in each of the first case 110 or the second case 120. In this case, additional sealing is performed in each of regions between the plurality of insulation failure-preventing portions 142, and thus, it is possible to simultaneously promote the insulation failure prevention and the sealing force enhancement.

The side portion 140 of the battery case 100 according to an embodiment of the present invention may further include a movement-preventing portion 143 that connects the insulation failure-preventing portion 142 and the cup portion 130 to each other and prevents the sealing material P accommodated in the insulation failure-preventing portion 142 from moving to the cup portion 130. That is, the movement-preventing portion 143 is formed between the recessed insulation failure-preventing portion 142 and the recessed cup portion 130, and protrudes from the outside to the inside relatively compared to the insulation failure-preventing portion 142 and the cup portion 130, thus making it possible to prevent the sealing material P accommodated in the insulation failure-preventing portion 142 from moving to the cup portion 130.

Also, a thickness T1 of the movement-preventing portion 143 may be greater than a thickness T2 of the sealing portion 141 and less than a thickness T3 of the insulation failure-preventing portion 142. In particular, the thickness T1 of the movement-preventing portion 143 is less than the thickness T3 of the insulation failure-preventing portion 142, and thus, it is possible to prevent the sealing material P accommodated in the insulation failure-preventing portion 142 from moving to the cup portion 130.

Meanwhile, the movement-preventing portion 143 may be formed in an unsealed state so as not to be in contact with each other in the side portion 140 formed in the first case 110 and the side portion 140 formed in the second case 120. Accordingly, the movement-preventing portion 143 together with the insulation failure-preventing portion 142 described above may be provided while forming a space in an unsealed state, and thus, it is possible to prevent the sealing material P accommodated in the insulation failure-preventing portion 142 from moving to the cup portion 130. Also, the movement-preventing portion 143 may also accommodate some of the melted sealing material P, which flows out of the sealing portion 141, remain as an empty space when not filled with the sealing material P, and also serve as a buffer space for absorbing external impact.

### Another embodiment

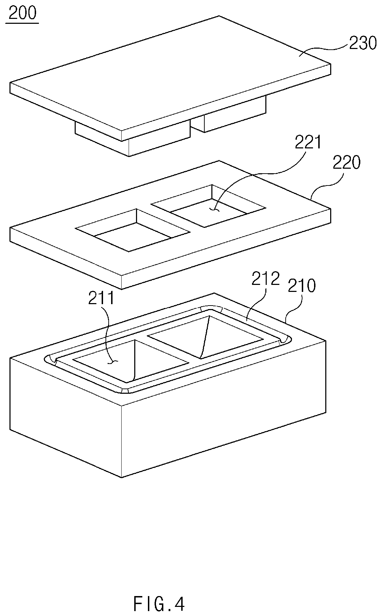

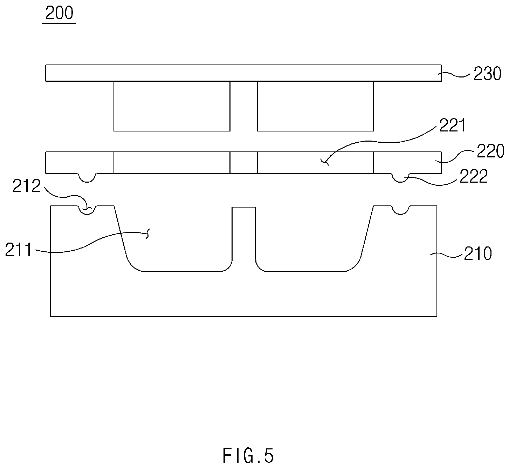

FIG. 4 is a perspective view illustrating a battery case shaping apparatus according to another embodiment of the present invention. FIG. 5 is a side cross-sectional view illustrating a battery case shaping apparatus according to another embodiment of the present invention.

Another embodiment of the present invention is different from the embodiment described above in that another embodiment provides an apparatus for shaping the battery case 100 according to the embodiment of the present invention. Therefore, the configuration of the battery case 100 may be understood as the same as the description in the above embodiment and the illustration in FIGS. 2 and 3, and the effects thereof may also be expected in the same way.

Referring to FIGS. 4 and 5, a battery case shaping apparatus 200 according to another embodiment of the present invention is an apparatus for shaping a battery case of a pouch-type secondary battery, which accommodates an electrode assembly therein, and may include a die plate 210, a stripper 220, and a punch 230.

Hereinafter, the apparatus is described with reference to FIGS. 2 to 5. First, the die plate 210 has an upper surface, on which a pouch film is placed, and has a shaping portion 211, which is recessed downward from or passes through the upper surface, and a groove 212, which is formed around the shaping portion 211. A punch 230 described below is inserted into the shaping portion 211 to shape the cup portion 130 of the battery case 100, and a rib 222 described below is inserted into the groove 212 to shape the insulation failure-preventing portion 142 of the battery case 100.

The stripper 220 presses and fixes the pouch film from above the die plate 210, and has a punch hole 221, which passes through an upper surface and a lower surface thereof at a position corresponding to the shaping portion 211, and a rib 222, which is formed around the punch hole 221 and faces the groove 212. A general stripper according to the related art is configured to serve only to fix a pouch film. However, in the battery case shaping apparatus 200 according to the present invention, the rib 222 is further formed along the circumference of the punch hole 221 of the stripper 220. Therefore, the stripper 220 may fix the pouch film and, at the same time, shape the insulation failure-preventing portion 142. Here, the shape of the rib 222 may be formed to correspond to the shape of the groove 212 and the insulation failure-preventing portion 142 of the battery case 100.

The punch 230 is inserted into the shaping portion 211 of the die plate 210 via the punch hole 221 of the stripper 220 to shape the cup portion 130 in the pouch film. That is, in a state in which the pouch film is fixed by the stripper 220, the punch 230 presses the pouch film. Accordingly, the pouch film is stretched, and the cup portion 130 is shaped into a shape corresponding to the punch 230 and the shaping portion 211.

In the battery case shaping apparatus 200 according to another embodiment of the present invention described above, the groove 212 is formed in the die plate 210, and the rib 222 is further formed in the stripper 220. Accordingly, the insulation failure-preventing portion 142 may be formed together with the cup portion 130 of the battery case 100. A detailed configuration of the insulation failure-preventing portion 142 formed in the battery case 100 and effects thereof may be understood as the same as those described in the above embodiment.

### Another embodiment

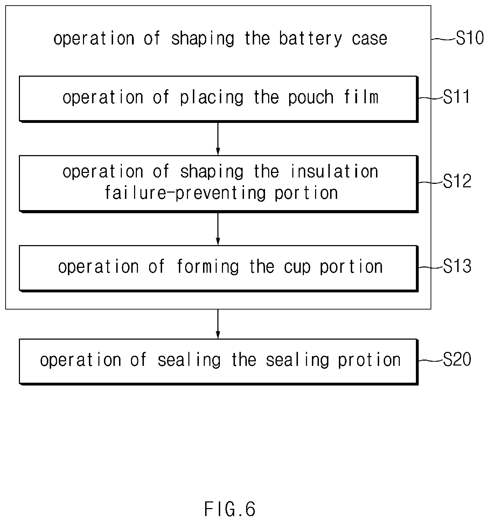

FIG. 6 is a flowchart illustrating a secondary battery manufacturing method according to another embodiment of the present invention.

Another embodiment of the present invention is different from the embodiments described above in that another embodiment provides a method for shaping the battery case 100 according to the embodiment described above by using the battery case shaping apparatus 200 according to another embodiment described above. Therefore, the configurations of the battery case 100 and the battery case shaping apparatus 200 may be understood as the same as the above descriptions and the illustration in FIGS. 2 to 5, and the effects thereof may also be expected in the same way.

Referring to FIG. 6 together with FIGS. 2 to 5, a secondary battery manufacturing method according to another embodiment of the present invention is a method for manufacturing a pouch-type secondary battery, which accommodates an electrode assembly therein, and the method includes shaping a battery case 100 that includes a cup portion 130 and an insulation failure-preventing portion 142 (S10) and accommodating an electrode assembly 10 in the cup portion 130 and sealing a sealing portion 141 of the battery case 100 (S20) . In the secondary battery manufacturing method according to the present invention described above, the insulation failure-preventing portion 142 is not formed during the operation (S20) of sealing the sealing portion 141, and the insulation failure-preventing portion 142 is formed during the operation (S10) of shaping the battery case 100 before the operation of sealing.

When described in detail, the shaping of the battery case 100 (S10) includes placing a pouch film on a die plate 210 that has a shaping portion 211 and a groove 212 formed around the shaping portion 211 (S11), pressing and fixing the pouch film from above the die plate 210 by a stripper 220 that has a punch hole 221 and a rib 222 formed around the punch hole 221, wherein the rib 222 is inserted into the groove 212 to shape the insulation failure-preventing portion 142 in the pouch film (S12); and inserting the punch 230 into the shaping portion 211 of the die plate 210 via the punch hole 221 of the stripper 220 to form the cup portion 130 in the pouch film (S13) .

As describe above, in the secondary battery manufacturing method according to the present invention, the insulation failure-preventing portion 142 is formed before the operation (S20) of sealing the sealing portion 141. Therefore, even when a molten sealing material P of the battery case 100 flows out during the sealing operation (S20), the sealing material may be accommodated in the insulation failure-preventing portion 142 to thereby minimize insulation failure.

Meanwhile, during the operation (S20) of sealing the sealing portion 141, the sealing portion 141 of a side portion 140 is heated, pressurized, and sealed using a bar-type or roller-type sealing tool. If necessary, in order to prevent mismatch between a first case 110 and a second case 120, pre-sealing is performed to seal a partial region of the sealing portion 141, and then, main-sealing may be performed to seal the entire sealing portion 141.

Although the present invention is described by specific embodiments and drawings, the present invention is not limited thereto, and various changes and modifications may be made by a person skilled in the art to which the present invention pertains within the technical idea of the present invention and equivalent scope of the appended claims.

### [Description of the Symbols]

10: Electrode assembly
100: Battery case
110: First case
120: Second case
130: Cup portion
140: Side portion
141: Sealing portion
142: Insulation failure-preventing portion
143: Movement-preventing portion
P: Sealing material
D1: Depth of insulation failure-preventing portion
D2: Depth of cup portion
T1: Thickness of movement-preventing portion
T2: Thickness of sealing portion
T3: Thickness of insulation failure-preventing portion
200: Battery case shaping apparatus
210: Die plate
211: Shaping portion
212: Groove
220: Stripper
221: Punch hole
222: Rib
230: Punch

## Claims

1. A battery case for a pouch-type secondary battery, which accommodates an electrode assembly therein, the battery case comprising:
a first case;
a second case configured to cover the first case from above;
a cup portion provided in at least one of the first case and the second case and having a space formed to accommodate the electrode assembly; and
a side portion formed along an outer circumference of each of the first case and the second case,
wherein the side portion comprises:
a sealing portion sealed by bringing the first case and the second case into contact with each other; and
an insulation failure-preventing portion which is formed between the sealing portion and the cup portion and accommodates a sealing material melted in the sealing portion.

2. The battery case of claim 1, wherein the insulation failure-preventing portion is recessed from the inside to the outside of the side portion with respect to a depth direction of the cup portion.

3. The battery case of claim 1, wherein the insulation failure-preventing portion has a curved inner surface.

4. The battery case of claim 1, wherein the depth of the insulation failure-preventing portion is less than the depth of the cup portion.

5. The battery case of claim 1, wherein the insulation failure-preventing portion is formed at positions which correspond to each other in the side portion formed in the first case and the side portion formed in the second case.

6. The battery case of claim 5, wherein the insulation failure-preventing portion is formed in an unsealed state so as not to be in contact with each other in the side portion formed in the first case and the side portion formed in the second case.

7. The battery case of claim 1, wherein the insulation failure-preventing portion is continuously or intermittently formed along the circumference of the cup portion between the sealing portion and the cup portion.

8. The battery case of claim 1, wherein the side portion further comprises a movement-preventing portion that connects the insulation failure-preventing portion and the cup portion to each other and prevents the sealing material accommodated in the insulation failure-preventing portion from moving to the cup portion.

9. The battery case of claim 8, wherein the movement-preventing portion is formed in an unsealed state so as not to be in contact with each other in the side portion formed in the first case and the side portion formed in the second case.

10. The battery case of claim 9, wherein the thickness of the movement-preventing portion is greater than the thickness of the sealing portion and less than the thickness of the insulation failure-preventing portion.

11. The battery case of claim 1, wherein the sealing material melted in the sealing portion protrudes toward the insulation failure-preventing portion.

12. An apparatus for shaping a battery case of a pouch-type secondary battery, which accommodates an electrode assembly therein, the apparatus comprising:
a die plate having an upper surface, on which a pouch film is placed, the die plate having a shaping portion, which is recessed downward from or passes through the upper surface, and a groove, which is formed around the shaping portion;
a stripper configured to press and fix the pouch film from above the die plate, the stripper having a punch hole, which passes through an upper surface and a lower surface thereof at a position corresponding to the shaping portion, and a rib, which is formed around the punch hole and faces the groove; and
a punch inserted into the shaping portion of the die plate via the punch hole of the stripper to shape a cup portion in the pouch film.

13. A method for manufacturing a pouch-type secondary battery, which accommodates an electrode assembly therein, the method comprising:
shaping a battery case that comprises a cup portion and an insulation failure-preventing portion; and
accommodating the electrode assembly in the cup portion and sealing a sealing portion of the battery case,
wherein the shaping of the battery case comprises:
placing a pouch film on a die plate that has a shaping portion and a groove formed around the shaping portion;
pressing and fixing the pouch film from above the die plate by a stripper that has a punch hole and a rib formed around the punch hole, wherein the rib is inserted into the groove to shape the insulation failure-preventing portion in the pouch film; and
inserting a punch into the shaping portion of the die plate via the punch hole of the stripper to shape the cup portion in the pouch film.
